# EUROPÄISCHE PATENTANMELDUNG

(11) **EP 3 451 100 A1**
(43) Veröffentlichungstag der Anmeldung: **06.03.2019**
(21) Anmeldenummer: 17189389.4
(22) Anmeldetag: 05.09.2017
(51) Int. Cl.: G05B 23/02, G05B 19/4065

(54) **AUTOMATISCHE BEWERTUNG EINES MASCHINENVERHALTENS**

(71) Anmelder: Siemens Aktiengesellschaft, 80333 München (DE)
(72) Erfinder: Die Erfindernennung liegt noch nicht vor

(57) **Zusammenfassung**

Eine Maschine weist einen Aktor (1) auf, der von einer Steuereinrichtung (5) der Maschine gesteuert wird. Die Steuereinrichtung (5) implementiert zur Steuerung des Aktors (1) eine Reglerstruktur (8). Sowohl in einem Normalbetrieb als auch in einem Sonderbetrieb der Maschine gibt die Steuereinrichtung (5) der Reglerstruktur (8) zyklisch jeweils einen Sollwert (x*) für eine von dem Aktor (1) auszuführende Aktion einer entsprechenden Abfolge von Sollwerten (x*) vor, den die Reglerstruktur (8) zusammen mit einem Istwert (x) für eine von dem Aktor (1) ausgeführte Aktion entgegennimmt. In Abhängigkeit von Sollwert (x*) und Istwert (x) ermittelt die Steuereinrichtung (5) ein Stellsignal (S) für den Aktor (1) und steuert den Aktor (1) entsprechend an. Im Normalbetrieb werden die Sollwerte (x*) von der Steuereinrichtung (5) anhand eines Nutzprogramms (16) ermittelt, im Sonderbetrieb anhand eines Systemprogramms (6). Im Sonderbetrieb erfasst die Steuereinrichtung (5) die sich ergebenden Istwerte (x) und ermittelt anhand der Abfolge von Sollwerten (x*) und zugehörigen Istwerten (x) eine Frequenzkennlinie (FKL) des Aktors (1). Anhand der Frequenzkennlinie (FKL) und Parametern (P1a, P1b, P2a, P2b) der Reglerstruktur (8) ermittelt die Steuereinrichtung (5) eine Bewertung (B) für den Aktor (1) und/oder die Reglerstruktur (8). In Abhängigkeit von der Bewertung (B) entscheidet sie, ob und gegebenenfalls welche Meldung (M, M') sie an einen Bediener (17) der Maschine oder über ein Rechnernetz (18) an eine Recheneinrichtung (19) übermittelt.

## Beschreibung

Die vorliegende Erfindung geht aus von einem Betriebsverfahren für eine Maschine, beispielsweise eine Produktionsmaschine, insbesondere eine Werkzeugmaschine,
- wobei die Maschine einen ersten Aktor aufweist,
- wobei der erste Aktor von einer Steuereinrichtung der Maschine gesteuert wird,
- wobei die Steuereinrichtung zur Steuerung des ersten Aktors eine Reglerstruktur implementiert,
- wobei sowohl in einem Normalbetrieb als auch in einem Sonderbetrieb der Maschine die Steuereinrichtung der Reglerstruktur zyklisch jeweils einen Sollwert für eine von dem ersten Aktor auszuführende Aktion einer entsprechenden Abfolge von Sollwerten vorgibt, und die Reglerstruktur jeweils den Sollwert und einen Istwert für eine von dem ersten Aktor ausgeführte Aktion entgegennimmt, in Abhängigkeit von dem Sollwert und dem Istwert ein Stellsignal für den ersten Aktor ermittelt und den ersten Aktor entsprechend dem ermittelten Stellsignal ansteuert,
- wobei die Sollwerte von der Steuereinrichtung im Normalbetrieb anhand eines Nutzprogramms und im Sonderbetrieb anhand eines vom Nutzprogramm verschiedenen Systemprogramms ermittelt werden,
- wobei im Sonderbetrieb die Steuereinrichtung die sich durch die Sollwerte ergebenden Istwerte erfasst und anhand der Abfolge von im Sonderbetrieb vorgegebenen Sollwerten und zugehörigen erfassten Istwerten eine Frequenzkennlinie des ersten Aktors ermittelt.

Die vorliegende Erfindung geht weiterhin aus von einem Systemprogramm für eine Steuereinrichtung einer Maschine, wobei das Systemprogramm Maschinencode umfasst, der von der Steuereinrichtung unmittelbar abarbeitbar ist, die Abarbeitung des Maschinencodes durch die Steuereinrichtung bewirkt, dass die Steuereinrichtung die Maschine gemäß einem derartigen Betriebsverfahren betreibt.

Die vorliegende Erfindung geht weiterhin aus von einer Steuereinrichtung für eine Maschine, wobei die Steuereinrichtung mit einem derartigen Systemprogramm programmiert ist, so dass die Steuereinrichtung die Maschine gemäß einem derartigen Betriebsverfahren betreibt.

Die vorliegende Erfindung geht weiterhin aus von einer Maschine, beispielsweise einer Produktionsmaschine, insbesondere einer Werkzeugmaschine
- wobei die Maschine einen ersten Aktor aufweist,
- wobei der erste Aktor von einer Steuereinrichtung der Maschine gesteuert wird,
- wobei die Steuereinrichtung so wie vorstehend erläutert ausgebildet ist.

Maschinendynamisches Verhalten lässt sich mit Frequenzkennlinien abbilden. Frequenzkennlinien sind aus regelungstechnischer Sicht gesehen sozusagen der Fingerabdruck der Maschine. Insbesondere zeigen sich Änderungen der Maschinendynamik auch in den Frequenzkennlinien.

Die Reglerstrukturen der Maschine - im vorliegenden Fall also die Reglerstruktur für den ersten Aktor - werden derart parametriert, dass der zugehörige Regelkreis in jedem Betriebszustand der Maschine stabil ist. Die Stabilität gilt genau genommen jedoch lediglich im Zeitpunkt der Parametrierung. Wenn sich das maschinendynamische Verhalten der Maschine nachträglich ändert, kann dies dazu führen, dass ein zuvor stabiler Regelkreis instabil wird. In diesem Fall ist eine Neueinstellung der Reglerstruktur erforderlich. Weiterhin können derartige Änderungen des maschinendynamischen Verhaltens auf Veränderungen von Komponenten hinweisen.

Wenn der Regelkreis instabil wird, ist es im Stand der Technik erforderlich, die Maschine stillzusetzen und neu zu parametrieren. Anderenfalls würde die Maschine Ausschuss produzieren oder eventuell sogar beschädigt werden. Falls die Instabilität auf defekte Komponenten zurückzuführen ist, muss weiterhin die defekte Komponente ausgetauscht werden. Die Suche nach der defekten Komponente gestaltet sich oftmals mühsam und aufwendig.

Im Stand der Technik ist es bereits bekannt, eine Frequenzkennlinie eines Regelkreises zu erfassen und auszuwerten. Die Auswertung geschieht dadurch, dass anhand der Frequenzkennlinie Parameter der Reglerstruktur ermittelt werden und die Reglerstruktur entsprechend der ermittelten Parametern parametriert wird. Rein beispielhaft kann auf die US 6 281 650 B1 oder auf das Funktionshandbuch für Sonderfunktionen der SINUMERIK 840D sl /828D - siehe dort Kapitel 12 - verwiesen werden.

Die Aufgabe der vorliegenden Erfindung besteht darin, Möglichkeiten zu schaffen, mittels derer auf einfache und zuverlässige Weise das dynamische Verhalten einer Maschine überwacht werden kann.

Die Aufgabe wird durch ein Betriebsverfahren für eine Maschine mit den Merkmalen des Anspruchs 1 gelöst. Vorteilhafte Ausgestaltungen des Betriebsverfahrens sind Gegenstand der abhängigen Ansprüche 2 bis 13.

Erfindungsgemäß wird ein Betriebsverfahren der eingangs genannten Art dadurch ausgestaltet, dass die Steuereinrichtung im Sonderbetrieb anhand der Frequenzkennlinie und Parametern der Reglerstruktur eine Bewertung für den ersten Aktor und/ oder die Reglerstruktur ermittelt und in Abhängigkeit von der Bewertung entscheidet, ob und gegebenenfalls welche Meldung sie an einen Bediener der Maschine oder über ein Rechnernetz an eine Recheneinrichtung übermittelt.

Eine Frequenzkennlinie umfasst üblicherweise eine Verstärkung und die Phasenlage als Funktion der Frequenz. Demgemäß gehen in die Bewertung vorzugsweise die Verstärkung und/oder ein Phasenverlauf der Frequenzkennlinie ein. Insbesondere kann die Steuereinrichtung Nullstellen und Pole der Frequenzkennlinie ermitteln und die Bewertung und der Verwertung der Nullstellen und Pole der Frequenzkennlinie und der Parameter der Reglerstruktur ermitteln.

Es ist möglich, dass die Steuereinrichtung gegebenenfalls nur die Meldung als solche ausgibt. Vorzugsweise prüft die Steuereinrichtung jedoch zusätzlich anhand der Bewertung, ob eine Neuermittlung der Parameter der Reglerstruktur erforderlich ist, und ermittelt gegebenenfalls die Parameter der Reglerstruktur neu.

Die Parameter der Reglerstruktur können verschiedene Parameter umfassen. Insbesondere können sie Parameter umfassen, welche die Steuereinrichtung im Rahmen der Neuermittlung der Parameter der Reglerstruktur variiert, und Parameter umfassen, welche die Steuereinrichtung beibehält. Diejenigen Parameter, welche die Steuereinrichtung variiert, werden nachfolgend als erste Parameter bezeichnet, die anderen Parameter als zweite Parameter.

Vorzugsweise ist durch das Systemprogramm festgelegt, welche der Parameter der Reglerstruktur erste Parameter und zweite Parameter sind.

Vorzugsweise umfassen die ersten Parameter Filterparameter, unter deren Verwendung die Istwerte oder die Differenz von Sollwerten und Istwerten vor der Ermittlung der jeweiligen Stellgröße in einem Filter gefiltert werden. Dadurch ist es möglich, die Reglerstruktur für den ersten Aktor unabhängig von Reglerstrukturen für etwaige andere Aktoren abzustimmen.

Gegebenenfalls können die ersten Parameter zusätzlich Reglerparameter umfassen, unter deren Verwendung der Regler anhand der Sollwerte und der gefilterten Istwerte oder der gefilterten Differenzen von Sollwerten und Istwerten die jeweilige Stellgröße ermittelt. In diesem Fall variiert die Steuereinrichtung die Reglerparameter vorzugsweise nur dann, wenn die Bewertung für den ersten Aktor und/oder die Reglerstruktur trotz des Variierens der Filterparameter unterhalb einer Minimalbewertung bleibt. Weiterhin variiert die Steuereinrichtung im Falle eines Variierens der Reglerparameter zugleich auch korrespondierende Parameter der Reglerstruktur mindestens eines zweiten Aktors der Maschine auf gleichartige Weise.

Es ist möglich, dass die Steuereinrichtung zyklisch vom Normalbetrieb in den Sonderbetrieb übergeht, beispielsweise einmal pro Tag oder einmal pro Woche. Alternativ oder zusätzlich ist es möglich, dass die Steuereinrichtung auf Aufforderung durch eine Bedienperson vom Normalbetrieb in den Sonderbetrieb übergeht.

In manchen Fällen ist es möglich, anhand der Frequenzkennlinie konkret festzustellen, ob und gegebenenfalls welche Komponente des ersten Aktors defekt ist. In diesem Fall kann die Meldung eine Meldung über einen Defekt des ersten Aktors sein.

Es ist möglich, dass das Betriebsverfahren rein lokal auf Seiten der Steuereinrichtung ausgeführt wird. Vorzugsweise legt die Steuereinrichtung jedoch die ermittelte Frequenzkennlinie über das Rechnernetz in einer Speichereinrichtung ab und/oder ruft über das Rechnernetz Kriterien zum Ermitteln der Bewertung und/oder Werte für zulässige und unzulässige Bewertungen aus der Speichereinrichtung ab.

Die Aufgabe wird weiterhin durch ein Systemprogramm mit den Merkmalen des Anspruchs 14 gelöst. Erfindungsgemäß bewirkt die Abarbeitung des Maschinencodes durch die Steuereinrichtung, dass die Steuereinrichtung die Maschine gemäß einem erfindungsgemäßen Betriebsverfahren betreibt.

Die Aufgabe wird weiterhin durch eine Steuereinrichtung mit den Merkmalen des Anspruchs 15 gelöst. Erfindungsgemäß ist die Steuereinrichtung mit einem erfindungsgemäßen Systemprogramm programmiert ist, so dass die Steuereinrichtung die Maschine gemäß einem erfindungsgemäßen Betriebsverfahren betreibt.

Die Aufgabe wird weiterhin durch eine Maschine mit den Merkmalen des Anspruchs 16 gelöst. Erfindungsgemäß ist die Steuereinrichtung der Maschine erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Produktionsmaschine,
- FIG 2: eine Reglerstruktur,
- FIG 3: ein Ablaufdiagramm,
- FIG 4: ein Ablaufdiagramm,
- FIG 5: eine Frequenzkennlinie,
- FIG 6: ein Ablaufdiagramm, und
- FIG 7: ein Ablaufdiagramm.

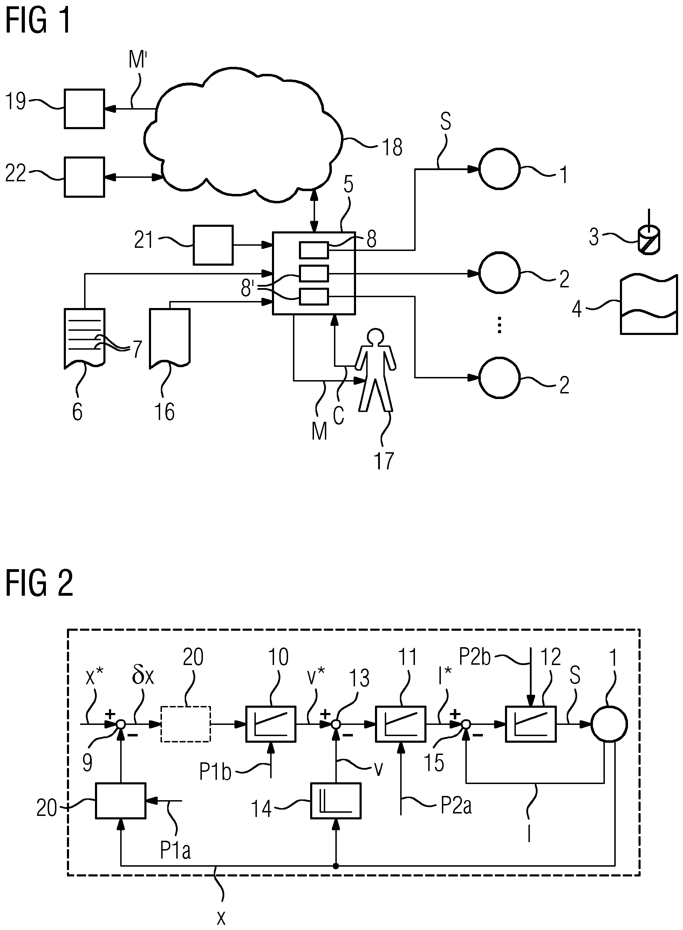

Gemäß FIG 1 weist eine Maschine einen Aktor 1 auf. Der Aktor 1 kann prinzipiell ein beliebiger Aktor sein, beispielsweise ein Stromsteller. Oftmals handelt es sich bei dem Aktor 1 um einen mechanischen Aktor, beispielsweise eine lagegeregelte oder drehzahlgeregelte Achse einer Produktionsmaschine, insbesondere einer Werkzeugmaschine.

Es ist möglich, dass der Aktor 1 der einzige Aktor der Maschine ist. Oftmals sind jedoch weitere Aktoren 2 vorhanden. Insbesondere bei einer Produktionsmaschine ist dies oftmals der Fall. Nachfolgend wird im Regelfall nur der Aktor 1 betrachtet. Er wird daher nachfolgend zur Unterscheidung von den weiteren Aktoren 2 als erster Aktor bezeichnet. Die weiteren Aktoren 2 werden als zweite Aktoren bezeichnet. Die zweiten Aktoren 2 können prinzipiell ebenfalls beliebiger Natur sein. Insbesondere bei einer Produktionsmaschine handelt es sich in der Regel ebenfalls um mechanische Aktoren, insbesondere um lagegeregelte oder drehzahlgeregelte Achsen der Produktionsmaschine. Beispielsweise kann mittels der Aktoren 1, 2 ein Werkzeug 3 relativ zu einem Werkstück 4 translatorisch positioniert und/oder rotatorisch orientiert werden.

Die Aktoren 1, 2 werden von einer Steuereinrichtung 5 der Maschine gesteuert. Die Steuereinrichtung 5 ist mit einem Systemprogramm 6 programmiert. Das Systemprogramm 6 umfasst Maschinencode 7, der von der Steuereinrichtung 5 unmittelbar abarbeitbar ist. Die Abarbeitung des Maschinencodes 7 durch die Steuereinrichtung 5 bewirkt, dass die Steuereinrichtung 5 die Maschine gemäß einem Betriebsverfahren betreibt, das nachstehend näher erläutert wird.

Entsprechend der Darstellung in FIG 2 implementiert die Steuereinrichtung 5 zur Steuerung des ersten Aktors 1 eine Reglerstruktur 8. Soweit die zweiten Aktoren 2 vorhanden sind, kann die Steuereinrichtung 5 zur Steuerung der zweiten Aktoren 2 ähnliche oder auch verschiedene Reglerstrukturen 8' implementieren.

Die Reglerstruktur 8 weist einen Knotenpunkt 9 auf. Dem Knotenpunkt 9 wird ein Sollwert x* für eine von dem ersten Aktor 1 auszuführende Aktion zugeführt. Der Sollwert x* wird der Reglerstruktur 8 bzw. dem Knotenpunkt 9 von der Steuereinrichtung 5 vorgegeben. Bei dem gegebenen Beispiel - einer Lageregelung - ist der Sollwert x* ein Lagesollwert. Im Falle der Ausgestaltung des ersten Aktors 1 als drehzahlgeregelte Achse wäre der Sollwert x* ein Drehzahlsollwert.

Die Reglerstruktur 8 nimmt den Sollwert x* entgegen. Sie nimmt weiterhin einen Istwert x für eine von dem ersten Aktor 1 ausgeführte Aktion. Bei dem gegebenen Beispiel - einer Lageregelung - ist der Istwert x eine Istlage. Im Knotenpunkt 9 wird die Differenz von Sollwert x* und Istwert x gebildet (Regeldifferenz δx) und einem Regler 10 zugeführt. Der Regler 10 kann beispielsweise als PI-Regler ausgebildet sein. Er kann aber auch anderweitig ausgebildet sein. Der Regler 10 ermittelt in Abhängigkeit von dem Sollwert x* und dem Istwert x ein Stellsignal S für den ersten Aktor 1. Entsprechend dem ermittelten Stellsignal S wird der erste Aktor 1 von der Reglerstruktur 8 angesteuert.

Oftmals umfasst die Reglerstruktur 8 entsprechend der Darstellung in FIG 2 nicht nur den Regler 10, sondern zusätzlich auch dem Regler 10 unterlagerte Regler 11, 12. Beispielsweise können im Falle einer Lageregelung dem Regler 10 (= Lageregler) ein Geschwindigkeitsregler 11 und ein Stromregler 12 unterlagert sein. In diesem Fall ermittelt der Regler 10 nicht direkt das Stellsignal S, sondern einen Geschwindigkeitssollwert v* und führt den Geschwindigkeitssollwert v* über einen weiteren Knotenpunkt 13 dem Geschwindigkeitsregler 11 zu. Dem weiteren Knotenpunkt 13 wird weiterhin ein Geschwindigkeitsistwert v zugeführt. Der Geschwindigkeitsistwert v kann beispielsweise mittels eines Differenzierers 14 aus dem Istwert x (also bei einer Lageregelung der Istlage) abgeleitet werden. Der Geschwindigkeitsregler 11 ermittelt gemäß der Reglerstruktur 8 von FIG 2 einen Stromsollwert I*, den er über einen weiteren Knotenpunkt 15 dem Stromregler 12 zuführt. Dem Stromregler 12 wird über den weiteren Knotenpunkt 15 weiterhin auch ein Stromistwert I zugeführt. Der Stromregler 12 ermittelt dann das Stellsignal S.

Die obenstehend erläuterte Ausgestaltung ist oftmals insbesondere dann implementiert, wenn der entsprechende Aktor 1, 2 als lagegeregelte Achse ausgebildet ist. Prinzipiell kann die Reglerstruktur 8 aber auch andersartig ausgebildet sein. Beispielsweise bei einer drehzahlgeregelten Achse ist bereits der Regler 10 ein Drehzahlregler, dem seinerseits ein Stromregler unterlagert sein kann. Auch dann ist das erfindungsgemäße Prinzip jedoch anwendbar.

Unabhängig von der konkreten Ausbildung arbeitet die Reglerstruktur 8 getaktet. Mit einem vorbestimmten Arbeitstakt von beispielsweise 8 kHz wird die vorstehend erläuterte Vorgehensweise also jeweils wieder mit neuen Werten ausgeführt. Sie wird also zyklisch ausgeführt. Mit jedem Arbeitstakt führt die Steuereinrichtung 5 der Reglerstruktur 8 also jeweils einen neuen Sollwert x* zu, und die Reglerstruktur 8 nimmt den neuen Sollwert x* und auch einen neuen Istwert x entgegen und ermittelt das Stellsignal S neu.

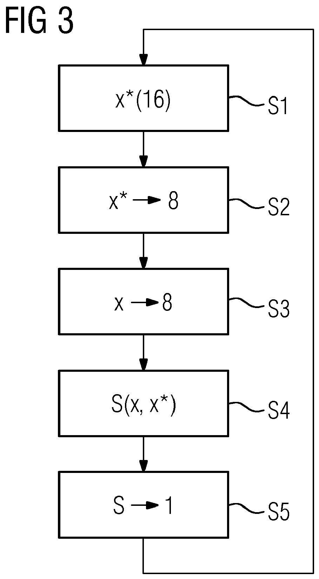

Die obenstehende Vorgehensweise wird einerseits in einem Normalbetrieb der Maschine ausgeführt. Im Normalbetrieb ermittelt die Steuereinrichtung 5 die Sollwerte x* anhand eines Nutzprogramms 16. Im Falle einer Produktionsmaschine kann das Nutzprogramm 16 beispielsweise ein sogenanntes Teileprogramm sein. Der Normalbetrieb wird nachstehend in Verbindung mit FIG 3 näher erläutert.

Gemäß FIG 3 ermittelt die Steuereinrichtung 5 in einem Schritt S1 anhand des Nutzprogramms 16 einen neuen Sollwert x*. Den Sollwert x* führt die Steuereinrichtung 5 in einem Schritt S2 der Reglerstruktur 8 zu, die den Sollwert x* entgegennimmt. In einem Schritt S3 nimmt die Reglerstruktur 8 den zeitlich zugehörigen Istwert x entgegen. In einem Schritt S4 ermittelt die Reglerstruktur 8 das Stellsignal S. In einem Schritt S5 steuert die Reglerstruktur 8 den ersten Aktor 1 entsprechend dem ermittelten Stellsignal S an. Diese Vorgehensweise wird zyklisch mit dem Arbeitstakt wiederholt.

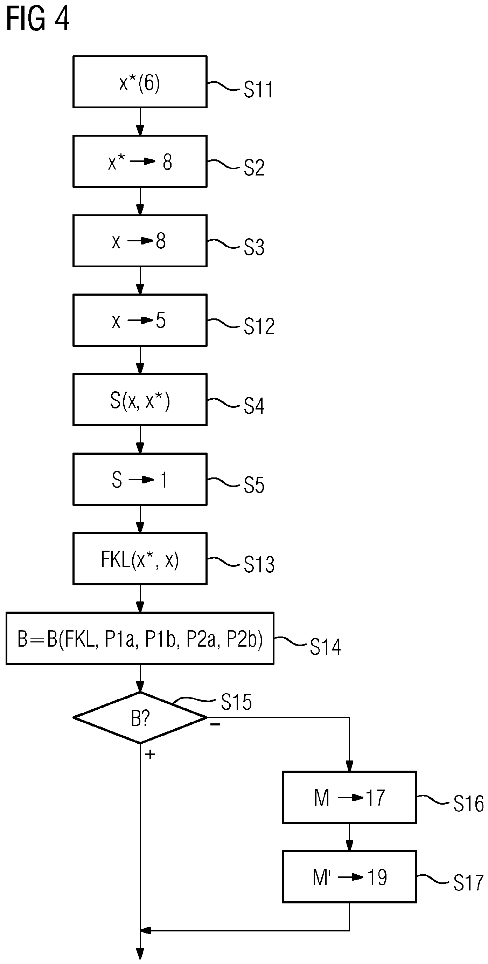

Die obenstehende Vorgehensweise wird andererseits auch in einem Sonderbetrieb der Maschine ausgeführt. Im Sonderbetrieb ermittelt die Steuereinrichtung 5 die Sollwerte x* jedoch anhand des Systemprogramms 6. Weiterhin ergreift die Steuereinrichtung 5 in diesem Fall weitere Maßnahmen. Der Sonderbetrieb wird nachstehend in Verbindung mit FIG 4 näher erläutert.

Auch im Sonderbetrieb sind die Schritte S2 bis S5 von FIG 3 enthalten. Der Schritt S1 ist jedoch durch einen Schritt S11 ersetzt, da im Rahmen von FIG 4 die Steuereinrichtung 5 den Sollwert x* anhand des Systemprogramms 6 ermittelt. Im Übrigen korrespondiert der Schritt S11 mit dem Schritt S1 von FIG 3. Weiterhin sind Schritte S12 bis S17 vorhanden.

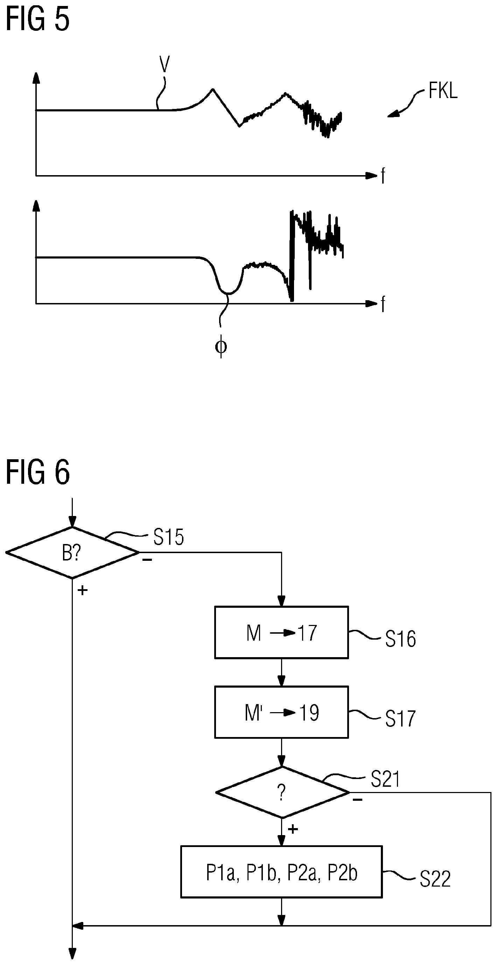

Im Schritt S12 speichert die Steuereinrichtung 5 den jeweils erfassten Istwert x. Die Abfolge der Istwerte x steht der Steuereinrichtung 5 somit für spätere Auswertungen zur Verfügung. In einem Schritt S13 ermittelt die Steuereinrichtung 5 anhand der Abfolge der im Sonderbetrieb vorgegebenen Sollwerte x* und der zugehörigen erfassten Istwerte x eine Frequenzkennlinie FKL des ersten Aktors 1. Ein Beispiel einer derartigen Frequenzkennlinie FKL ist in FIG 5 dargestellt. Die Frequenzkennlinie FKL umfasst entsprechend der Darstellung in FIG 5 eine Verstärkung V und die Phasenlage ϕ, jeweils als Funktion der Frequenz f.

Im Schritt S14 ermittelt die Steuereinrichtung 5 anhand der Frequenzkennlinie FKL und Parametern P1a, P1b, P2a, P2b der Reglerstruktur 8 eine Bewertung B für den ersten Aktor 1 und/oder die Reglerstruktur 8.

Die Parameter P1a, P1b, P2a, P2b der Reglerstruktur 8 sind von den Variablen der Reglerstruktur 8 verschiedene Größen. Variable sind Größen, die der Reglerstruktur 8 in jedem Arbeitstakt neu vorgegeben werden, also insbesondere der jeweilige Sollwert x* und der jeweilige Istwert x. Parameter hingegen sind Größen, die der Reglerstruktur 8 nur in erheblich größeren zeitlichen Abständen neu vorgegeben werden und nur dann geändert werden, wenn dies erforderlich ist. Insbesondere handelt es sich weder um erfasste Istgrößen noch um getaktet vorgegebene Sollgrößen.

Zur Ermittlung der Bewertung B kann die Steuereinrichtung 5 insbesondere die Verstärkung V und/oder den Phasenverlauf der Frequenzkennlinie FKL bewerten. In die Bewertung B können also die entsprechenden Größen eingehen. Insbesondere kann die Steuereinrichtung 5 Nullstellen und Pole der Frequenzkennlinie FKL ermitteln und die Bewertung B unter Verwertung der Nullstellen und Pole der Frequenzkennlinie FKL und der Parameter P1a, P1b, P2a, P2b der Reglerstruktur 8 ermitteln. Im Schritt S15 prüft die Steuereinrichtung 5, ob die ermittelte Bewertung B innerhalb eines vorbestimmten Rahmens liegt, insbesondere eine Minimalbewertung nicht unterschreitet. Zumindest dann, wenn die Minimalbewertung unterschritten wird, übermittelt die Steuereinrichtung 5 im Schritt S16 eine Meldung M an einen Bediener 17 der Maschine. Alternativ oder zusätzlich kann die Steuereinrichtung 5 im Schritt S17 eine Meldung M' über ein Rechnernetz 18 an eine Recheneinrichtung 19 übermitteln. Die Recheneinrichtung 19 ist eine von der Steuereinrichtung 5 verschiedene Recheneinrichtung.

Im einfachsten Fall gibt die Steuereinrichtung 5 nur die Meldung M und/oder die Meldung M' aus und wartet im Übrigen eine Aktion ab, beispielsweise eine Neuparametrierung der Reglerstruktur 8 durch den Bediener 17. Vorzugsweise ist die Vorgehensweise von FIG 4 jedoch entsprechend der Darstellung in FIG 6 durch Schritte S21 und S22 ergänzt. Im Schritt S21 prüft die Steuereinrichtung 5 anhand der Bewertung B, ob eine Neuermittlung der Parameter P1a, P1b, P2a, P2b der Reglerstruktur 8 erforderlich ist. Wenn dies der Fall ist, ermittelt die Steuereinrichtung 5 im Schritt S22 die Parameter P1a, P1b, P2a, P2b der Reglerstruktur 8 neu.

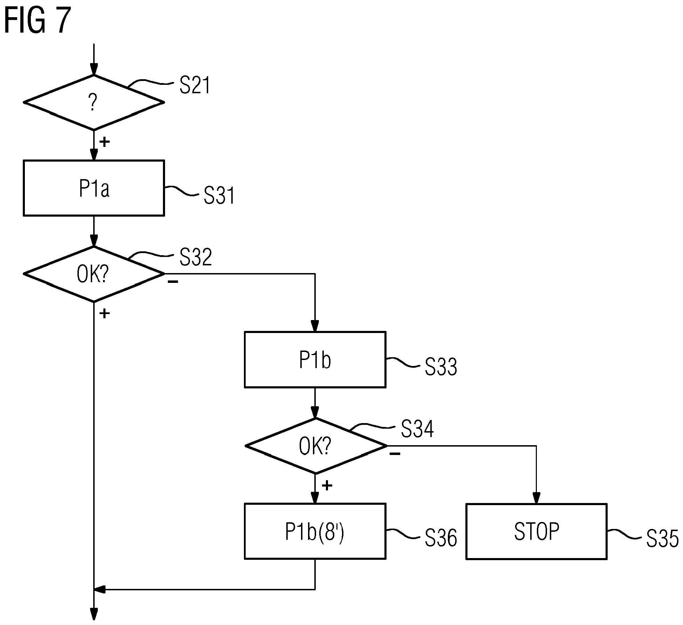

Die Parameter P1a, P1b, P2a, P2b der Reglerstruktur 8 umfassen erste Parameter P1a, P1b und zweite Parameter P2a, P2b. Vorzugsweise variiert die Steuereinrichtung 8 entsprechend der Darstellung in FIG 7 im Rahmen der Neuermittlung der Parameter P1a, P1b, P2a, P2b der Reglerstruktur 8 nur die ersten Parameter P1a, P1b. Die zweiten Parameter P2a, P2b behält sie hingegen bei. Welche der Parameter P1a, P1b, P2a, P2b der Reglerstruktur 8 erste Parameter P1a, P1b und zweite Parameter P2a, P2b sind, kann entsprechend der Darstellung in FIG 1 insbesondere durch das Systemprogramm 6 festgelegt sein. Beispielsweise umfasst die Reglerstruktur 8 entsprechend der Darstellung in FIG 1 oftmals einen Filter 20. Es ist - so wie in FIG 1 in durchgezogenen Linien dargestellt - möglich, dass dem Filter 20 die Istwerte x zugeführt werden und dass der Filter 20 die Istwerte x filtert. In diesem Fall ermittelt der Regler 10 (direkt oder indirekt) anhand der Sollwerte x* und der gefilterten Istwerte x die jeweilige Stellgröße S. Es ist - so wie in FIG 1 in gestrichelten Linien dargestellt - alternativ möglich, dass dem Filter 20 die Regeldifferenz δx zugeführt wird, also die Differenz der Sollwerte x* und der Istwerte x. In diesem Fall ermittelt der Regler 10 die jeweilige Stellgröße S (direkt oder indirekt) anhand der gefilterten Regeldifferenz δx.

Entsprechend der Darstellung in FIG 1 kann der Filter 20 parametriert werden. Die Parametrierung des Filters 20 erfolgt beispielsweise mittels der ersten Parameter P1a (Filterparameter). Die Filterparameter P1a können beispielsweise eine Filterordnung und/oder Grenzfrequenzen spezifizieren. Unabhängig von der Art der Filterparameter P1a werden die Istwerte x oder die Regeldifferenz jedoch vor der Ermittlung der jeweiligen Stellgröße S in dem Filter 20 unter Verwendung der Filterparameter P1a gefiltert.

Weiterhin ist es möglich, dass auch der Regler 10 parametriert wird. Die Parametrierung des Reglers 10 erfolgt gegebenenfalls mittels der ersten Parameter P1b (Reglerparameter). Beispielsweise können im Falle eines PI-Reglers die Proportionalverstärkung und die Integrationszeitkonstante des Reglers 10 parametriert werden. Unabhängig von der Art der Reglerparameter P1b ermittelt der Regler 10 die Stellgröße S aus der ihm zugeführten Regeldifferenz δx unter Verwendung der Reglerparameter P1b.

Wenn die Steuereinrichtung 5 die Parameter P1a, P1b, P2a, P2b der Reglerstruktur 8 variiert, variiert die Steuereinrichtung 5 gemäß FIG 7 vorzugsweise zunächst in einem Schritt S31 die Filterparameter P1a. Sodann prüft die Steuereinrichtung 5 in einem Schritt S32, ob die Neuparametrierung erfolgreich war, das heißt dass die Bewertung B nunmehr im zulässigen Bereich liegt, insbesondere nicht mehr unterhalb einer Minimalbewertung bleibt. Wenn dies der Fall ist, ist die Vorgehensweise von FIG 7 beendet. Anderenfalls - und nur dann - geht die Steuereinrichtung 5 zu einem Schritt S33 über, in dem die Steuereinrichtung 5 die Reglerparameter P1b variiert. Sodann prüft die Steuereinrichtung 5 in einem Schritt S34 erneut, ob die Neuparametrierung erfolgreich war. Wenn dies der Fall ist, ist die Vorgehensweise von FIG 7 beendet. Anderenfalls beendet die Steuereinrichtung 5 in einem Schritt S35 den weiteren Betrieb der Maschine, da in diesem Fall die Gefahr der Produktion von Ausschuss und/oder von Maschinenschäden besteht. Alternativ kann die Steuereinrichtung 5 in diesem Fall in einen Notbetrieb übergehen

In manchen Fällen ist es erforderlich, dass die Reglerstrukturen 8' der zweiten Aktoren 2 gleichartig zur Reglerstruktur 8 des ersten Aktors 1 parametriert sind. Dies betrifft zwar nicht die Filterparameter P1a, wohl aber die Reglerparameter P1b. Eine derartige gleichartige Parametrierung kann beispielsweise erforderlich sein, wenn sowohl der erste Aktor 1 als auch die zweiten Aktoren 2 als lagegeregelte Achsen ausgebildet sind und der erste Aktor 1 und die zweiten Aktoren 1, 2 auf eine gemeinsame Einrichtung wirken, beispielsweise die Positionierung des Werkzeugs 3 relativ zum Werkstück 4. In einem derartigen Fall, wenn also eine gleichartige Parametrierung mehrerer Reglerstrukturen 8, 8' erforderlich ist, ist dem Schritt S34 ein Schritt S36 nachgeordnet. Im Schritt S36 variiert die Steuereinrichtung 5 korrespondierende Parameter der Reglerstruktur 8' mindestens eines zweiten Aktors 2 der Maschine auf die gleiche Art und Weise, auf welche sie im Schritt S33 die Reglerparameter P1b der Reglerstruktur 8 variiert hat.

Der Sonderbetrieb kann zyklisch ausgeführt werden. Dies ist in FIG 1 durch einen Zeitgeber 21 angedeutet, der von Zeit zu Zeit den Übergang in den Sonderbetrieb auslöst. Beispielsweise wird der Maschinenbetreiber in der Regel in größeren zeitlichen Abständen (beispielsweise einmal pro Tag oder einmal pro Woche) jeweils einen Testlauf der Maschine durchführen. In diesem Testlauf können der Übergang in den Sonderbetrieb und die Durchführung des Sonderbetriebs eingebettet werden. Alternativ oder zusätzlich ist es möglich, dass der Bediener 17 entsprechend der Darstellung in FIG 1 einen Sonderbefehl C vorgeben kann, der direkt den Übergang in den Sonderbetrieb und die Durchführung des Sonderbetriebs bewirkt. Dadurch ist der Bediener 17 in der Lage, den Sonderbetrieb durchzuführen, wenn ihm dies erforderlich erscheint.

Die Meldungen M, M' können nach Bedarf sein. Im einfachsten Fall umfassen sie lediglich die Bewertung B als solche. In manchen Fällen kann aus der Frequenzkennlinie FKL - gegebenenfalls in Verbindung mit den Parametern P1a, P1b, P2a, P2b der Reglerstruktur 8 - jedoch konkret auf eine Fehlfunktion einer bestimmten Komponente des ersten Aktors 1 geschlossen werden, beispielsweise eines Kugelgewindetriebs. In diesem Fall kann die Meldung M, M' direkt eine Meldung über einen entsprechenden Defekt des ersten Aktors 1 bzw. der entsprechenden Komponente des ersten Aktors 1 sein.

Es ist möglich, dass die Steuereinrichtung 5 das erfindungsgemäße Betriebsverfahren vollständig lokal ausführt, das heißt dass keine elektronische Kommunikation zu einer anderen technischen Einrichtung erfolgt. Beispielsweise ist das Übermitteln der Meldung M' an die Recheneinrichtung 19 nicht zwingend. Vorzugsweise erfolgt jedoch eine derartige Über-mittlung. Weiterhin ist es möglich, dass die Steuereinrichtung 5 die ermittelte Frequenzkennlinie FKL über das Rechnernetz 18 in einer externen Speichereinrichtung 22 ablegt. Alternativ oder zusätzlich kann die Steuereinrichtung 5 über das Rechnernetz 18 Kriterien zum Ermitteln der Bewertung B und/oder Werte für zulässige und unzulässige Bewertungen aus der externen Speichereinrichtung 22 abrufen. Die Speichereinrichtung 22 kann beispielsweise Bestandteil einer sogenannten Cloud sein.

Zusammengefasst betrifft die vorliegende Erfindung somit folgenden Sachverhalt:

Eine Maschine weist einen ersten Aktor 1 auf, der von einer Steuereinrichtung 5 der Maschine gesteuert wird. Die Steuereinrichtung 5 implementiert zur Steuerung des ersten Aktors 1 eine Reglerstruktur 8. Sowohl in einem Normalbetrieb als auch in einem Sonderbetrieb der Maschine gibt die Steuereinrichtung 5 der Reglerstruktur 8 zyklisch jeweils einen Sollwert x* für eine von dem ersten Aktor 1 auszuführende Aktion einer entsprechenden Abfolge von Sollwerten x* vor, den die Reglerstruktur 8 zusammen mit einem Istwert x für eine von dem ersten Aktor 1 ausgeführte Aktion entgegennimmt. In Abhängigkeit von Sollwert x* und Istwert x ermittelt die Steuereinrichtung 5 ein Stellsignal S für den ersten Aktor 1 und steuert den ersten Aktor 1 entsprechend an. Im Normalbetrieb werden die Sollwerte x* von der Steuereinrichtung 5 anhand eines Nutzprogramms 16 ermittelt, im Sonderbetrieb anhand eines hiervon verschiedenen Systemprogramms 6. Im Sonderbetrieb erfasst die Steuereinrichtung 5 die sich durch die Sollwerte x* ergebenden Istwerte x und ermittelt anhand der Abfolge von im Sonderbetrieb vorgegebenen Sollwerten x* und zugehörigen erfassten Istwerten x eine Frequenzkennlinie FKL des ersten Aktors 1. Anhand der Frequenzkennlinie FKL und Parametern P1a, P1b, P2a, P2b der Reglerstruktur 8 ermittelt die Steuereinrichtung 5 eine Bewertung B für den ersten Aktor 1 und/oder die Reglerstruktur 8. In Abhängigkeit von der Bewertung B entscheidet sie, ob und gegebenenfalls welche Meldung M, M' sie an einen Bediener 17 der Maschine oder über ein Rechnernetz 18 an eine Recheneinrichtung 19 übermittelt.

Die vorliegende Erfindung weist viele Vorteile auf. Insbesondere ist auf einfache und zuverlässige Weise eine frühzeitige Erkennung problematischer Maschinenzustände möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Maschine, beispielsweise eine Produktionsmaschine, insbesondere eine Werkzeugmaschine,
- wobei die Maschine einen ersten Aktor (1) aufweist,
- wobei der erste Aktor (1) von einer Steuereinrichtung (5) der Maschine gesteuert wird,
- wobei die Steuereinrichtung (5) zur Steuerung des ersten Aktors (1) eine Reglerstruktur (8) implementiert,
- wobei sowohl in einem Normalbetrieb als auch in einem Sonderbetrieb der Maschine die Steuereinrichtung (5) der Reglerstruktur (8) zyklisch jeweils einen Sollwert (x*) für eine von dem ersten Aktor (1) auszuführende Aktion einer entsprechenden Abfolge von Sollwerten (x*) vorgibt, und die Reglerstruktur (8) jeweils den Sollwert (x*) und einen Istwert (x) für eine von dem ersten Aktor (1) ausgeführte Aktion entgegennimmt, in Abhängigkeit von dem Sollwert (x*) und dem Istwert (x) ein Stellsignal (S) für den ersten Aktor (1) ermittelt und den ersten Aktor (1) entsprechend dem ermittelten Stellsignal (S) ansteuert,
- wobei die Sollwerte (x*) von der Steuereinrichtung (5) im Normalbetrieb anhand eines Nutzprogramms (16) und im Sonderbetrieb anhand eines vom Nutzprogramm (16) verschiedenen Systemprogramms (6) ermittelt werden,
- wobei die Steuereinrichtung (5) im Sonderbetrieb die sich durch die Sollwerte (x*) ergebenden Istwerte (x) erfasst, anhand der Abfolge von im Sonderbetrieb vorgegebenen Sollwerten (x*) und zugehörigen erfassten Istwerten (x) eine Frequenzkennlinie (FKL) des ersten Aktors (1) ermittelt, anhand der Frequenzkennlinie (FKL) und Parametern (P1a, P1b, P2a, P2b) der Reglerstruktur (8) eine Bewertung (B) für den ersten Aktor (1) und/oder die Reglerstruktur (8) ermittelt und in Abhängigkeit von der Bewertung (B) entscheidet, ob und gegebenenfalls welche Meldung (M, M') sie an einen Bediener (17) der Maschine oder über ein Rechnernetz (18) an eine Recheneinrichtung (19) übermittelt.

2. Betriebsverfahren nach Anspruch 1,
**dadurch gekennzeichnet, dass** die Frequenzkennlinie (FKL) eine Verstärkung (V) und die Phasenlage (ϕ) als Funktion der Frequenz (f) umfasst.

3. Betriebsverfahren nach Anspruch 2,
**dadurch gekennzeichnet, dass** in die Bewertung (B) die Verstärkung (V) und/oder ein Phasenverlauf der Frequenzkennlinie (FKL) eingehen.

4. Betriebsverfahren nach Anspruch 1, 2 oder 3,
**dadurch gekennzeichnet, dass** die Steuereinrichtung (5) Nullstellen und Pole der Frequenzkennlinie (FKL) ermittelt und die Bewertung (B) unter Verwertung der Nullstellen und Pole der Frequenzkennlinie (FKL) und der Parameter (P1a, P1b, P2a, P2b) der Reglerstruktur (8) ermittelt.

5. Betriebsverfahren nach einem der obigen Ansprüche,
**dadurch gekennzeichnet, dass** die Steuereinrichtung (5) anhand der Bewertung (B) prüft, ob eine Neuermittlung der Parameter (P1a, P1b, P2a, P2b) der Reglerstruktur (8) erforderlich ist, und gegebenenfalls die Parameter (P1a, P1b, P2a, P2b) der Reglerstruktur (8) neu ermittelt.

6. Betriebsverfahren nach Anspruch 5,
**dadurch gekennzeichnet, dass** die Parameter (P1a, P1b, P2a, P2b) der Reglerstruktur (8) erste und zweite Parameter (P1a, P1b, P2a, P2b) umfassen und dass die Steuereinrichtung (5) im Rahmen der Neuermittlung der Parameter (P1a, P1b, P2a, P2b) der Reglerstruktur (8) nur die ersten Parameter (P1a, P1b) variiert, die zweiten Parameter (P2a, P2b) hingegen beibehält.

7. Betriebsverfahren nach Anspruch 6,
**dadurch gekennzeichnet, dass** durch das Systemprogramm (6) festgelegt ist, welche der Parameter (P1a, P1b, P2a, P2b) der Reglerstruktur (8) erste Parameter (P1a, P1b) und zweite Parameter (P2a, P2b) sind.

8. Betriebsverfahren nach Anspruch 6 oder 7,
**dadurch gekennzeichnet, dass** die ersten Parameter (P1a, P1b) Filterparameter (P1a) umfassen, unter deren Verwendung die Istwerte (x) oder die Differenz (δx) von Sollwerten (x*) und Istwerten (x) vor der Ermittlung der jeweiligen Stellgröße (S) in einem Filter (20) gefiltert werden.

9. Betriebsverfahren nach Anspruch 8,
**dadurch gekennzeichnet, dass** die ersten Parameter (P1a, P1b) zusätzlich Reglerparameter (P1b) umfassen, unter deren Verwendung der Regler (10) anhand der Sollwerte (x*) und der gefilterten Istwerte (x) oder der gefilterten Differenz (δx) von Sollwerten (x*) und Istwerten (x) die jeweilige Stellgröße (S) ermittelt, und dass die Steuereinrichtung (5) die Parameter (P1a, P1b, P2a, P2b) der Reglerstruktur (8) nur dann variiert, wenn die Bewertung (B) für den ersten Aktor (1) und/oder die Reglerstruktur (8) trotz des Variierens der Filterparameter (P1a) unterhalb einer Minimalbewertung bleibt.

10. Betriebsverfahren nach Anspruch 9,
**dadurch gekennzeichnet, dass** die Steuereinrichtung (5) im Falle eines Variierens der Reglerparameter (P1b) zugleich auch korrespondierende Reglerparameter mindestens eines zweiten Aktors (2) der Maschine auf gleichartige Weise variiert.

11. Betriebsverfahren nach einem der obigen Ansprüche,
**dadurch gekennzeichnet, dass** die Steuereinrichtung (5) zyklisch und/oder auf Aufforderung durch eine Bedienperson (17) vom Normalbetrieb in den Sonderbetrieb übergeht.

12. Betriebsverfahren nach einem der obigen Ansprüche,
**dadurch gekennzeichnet, dass** die Meldung (M, M') eine Meldung (M, M') über einen Defekt des ersten Aktors (1) ist.

13. Betriebsverfahren nach einem der obigen Ansprüche,
**dadurch gekennzeichnet, dass** die Steuereinrichtung (5) die ermittelte Frequenzkennlinie (FKL) über das Rechnernetz (18) in einer Speichereinrichtung (22) ablegt und/oder über das Rechnernetz (18) Kriterien zum Ermitteln der Bewertung (B) und/oder Werte für zulässige und unzulässige Bewertungen aus der Speichereinrichtung (22) abruft.

14. Systemprogramm für eine Steuereinrichtung (5) einer Maschine, wobei das Systemprogramm Maschinencode (7) umfasst, der von der Steuereinrichtung (5) unmittelbar abarbeitbar ist, die Abarbeitung des Maschinencodes (7) durch die Steuereinrichtung (5) bewirkt, dass die Steuereinrichtung (5) die Maschine gemäß einem Betriebsverfahren nach einem der obigen Ansprüche betreibt.

15. Steuereinrichtung für eine Maschine, wobei die Steuereinrichtung mit einem Systemprogramm (6) nach Anspruch 14 programmiert ist, so dass die Steuereinrichtung die Maschine gemäß einem Betriebsverfahren nach einem der Ansprüche 1 bis 13 betreibt.

16. Maschine, beispielsweise Produktionsmaschine, insbesondere Werkzeugmaschine,
- wobei die Maschine einen ersten Aktor (1) aufweist,
- wobei der erste Aktor (1) von einer Steuereinrichtung (5) der Maschine gesteuert wird,
- wobei die Steuereinrichtung (5) gemäß Anspruch 15 ausgebildet ist.
